# EUROPÄISCHE PATENTSCHRIFT

(11) **EP 1 550 835 B1**
(45) Veröffentlichungstag und Bekanntmachung des Hinweises auf die Patenterteilung: **05.10.2011**
(21) Anmeldenummer: 04400054.5
(22) Anmeldetag: 21.10.2004
(51) Int. Cl.: F28F 9/18, F28F 21/06, D06F 58/24, B29C 65/02, B29K 23/00, B29L 31/18

(54) **Kreuzstromwärmetauscher für Kondensationswäschetrockner**
Cross flow heat exchanger for laundry dryer with condenser
Echangeur de chaleur à courants croisés pour sèche-linge avec condenseur

(30) Priorität: 27.11.2003 DE 10356417
(43) Veröffentlichungstag der Anmeldung: 06.07.2005
(73) Patentinhaber: Joma-Polytec GmbH, 72411 Bodelshausen (DE)
(72) Erfinder: Maute, Alexander, 72379 Hechingen-Stetten (DE)
(74) Vertreter: Dreiss

(56) Entgegenhaltungen:
- EP-A- 0 982 427
- EP-A- 1 106 729
- DE-U1- 9 105 079
- FR-A- 2 339 830
- FR-A- 2 785 375
- GB-A- 1 344 913
- GB-A- 1 384 460
- US-A1- 2004 079 521
- PATENT ABSTRACTS OF JAPAN Bd. 007, Nr. 102 (M-211), 30. April 1983 (1983-04-30) & JP 58 022896 A (HITACHI SEISAKUSHO KK), 10. Februar 1983 (1983-02-10)

## Beschreibung

Die Erfindung betrifft einen Kreuzstromwärmetauscher für Kondensationswäschetrockner, mit einer Vielzahl von aus thermoplastischem Material bestehenden Wärmetauscherplatten, die zueinander parallel geschichtet sind und Kanäle für Feuchtluft und Kühlluft bilden oder begrenzen, mit mindestens einem aus thermoplastischem Material bestehenden Flansch, an dem die Wärmetauscherplatten festgelegt sind. Die Erfindung betrifft auch ein Verfahren zur Herstellung eines Kreuzstromwärmetauschers für Kondensationswäschetrockner.

Ein solcher Kreuzstromwärmetauscher ist aus der EP-A-1 106 729, der EP-A-0 982 427 und der DE-U-91 05 079 bekannt. Bei solchen Wärmetauschern wird als Prozessluft Kühlluft verwendet, die durch den Wärmetauscher hindurchgeleitet wird. Diese Kühlluft kühlt die warme Feuchtluft, die den Wärmetauscher quer zur Kühlluft durchströmt. Durch die Abkühlung der warmen Feuchtluft kann Feuchtigkeit abgeschieden werden, die sich an den Oberflächen der Wärmetauscherplatten niederschlägt und als Kondensat abfließen kann. Die gattungsbildende EP-A-1106729 beschreibt den Oberbegriff der Ansprüche 1 und 6.

Bei der EP-A-0 982 427 sind die Wärmetauscherplatten an einem Flansch gehalten, so dass insgesamt ein etwa würfeloder quaderförmiges Gebilde geschaffen wird. Dabei können die Wärmetauscherplatten einzeln oder paarweise am Flansch festgelegt sein. Die Wärmetauscherplatten können auch miteinander, beispielsweise durch zusätzliche Stege, verbunden sein.

Es ist aus der EP-A-0 982 427 bekannt, die Wärmetauscherplatten mit Hilfe eines Klebers am Flansch festzulegen. Hierfür wird die Verwendung von Gießharz vorgeschlagen. Dies ist nachteilig, da die für ein Gießharz verwendeten Komponenten zuerst mittels einer Mischanlage und Mischkopf miteinander vor dem Vergießen vermischt werden müssen. Nach einer bestimmten Anzahl von Mischvorgängen müssen die Mischvorrichtung und der Mischkopf gespült werden. Außerdem können diese Komponenten gesundheitsbedenkliche Zyanidverbindungen enthalten. Außerdem ist es schwierig oder sogar unmöglich, die durch Gießharz miteinander gefügten thermoplastischen Bauteile einem Recyclingprozess zuzuführen. Schließlich muss das Gemisch aus Spülflüssigkeit und Gießharzrückständen sachgerecht entsorgt werden.

Hiervon ausgehend liegt der Erfindung die Aufgabe zugrunde, einen Kreuzstromwärmetauscher bereitzustellen, bei dem der Flansch einfach und dennoch für die Festigkeit einer anschließender Verschweißung von Vorteil mit einer Vielzahl von Wärmetauscherplatten gefügt werden kann..

Diese Aufgabe wird erfindungsgemäß mit einem Kreuzstromwärmetauscher gelöst, der die Merkmale des Anspruchs 1 aufweist.

Hierdurch können die Wärmetauscherplatten und der Flansch direkt, das heißt ohne Verwendung von Gießharz, miteinander gefügt werden. Die Schweißverbindung lässt sich kostengünstig herstellen und gewährleistet außerdem die zur Vermeidung von Leckverlusten erforderliche Dichtheit zwischen Wärmetauscherplatten und Flansch.

In Ausführung der Erfindung weist der Flansch Aufnahmeabschnitte für Randabschnitte der Wärmetauscherplatten auf. Hierdurch kann die Relativlage von Wärmetauscherplatten und Flansch definiert werden. Dies ist für eine einfache Handhabung der Wärmetauscherplatten von Vorteil, insbesondere dann, wenn diese folienartig und somit biegeschlaff ausgebildet sind.

Die Aufnahmeabschnitte können stegförmig, insbesondere konisch, ausgebildet sein, so dass sie problemlos zwischen die Wärmetauscherplatten eingeschoben werden können, bevor die Randabschnitte und die Aufnahmeabschnitte durch eines der beschriebenen Schweißverfahren miteinander gefügt werden.

Die Aufnahmeabschnitte können auch als Durchbrüche ausgebildet sein, so dass Randabschnitte der Wärmetauscherplatten, die Durchbrüche durchgreifend, in diesen aufgenommen sind. Auch hierdurch kann eine gute Stabilität des Verbunds aus Wärmetauscherplatten und Flansch erreicht werden.

Die Schweißverbindung kann beispielsweise durch Ultraschallschweißen hergestellt sein. Aufgrund der sehr kurzen Schweißzeiten eignet sich dieses Verfahren besonders für die Großserienherstellung einer erfindungsgemäßen Kreuzstromwärmetauschers.

Die Verbindung kann auch durch Reibschweißen hergestellt sein. Auch mit diesem Verfahren sind verhältnismäßig kurze Prozesszeiten erreichbar, wobei sich das Reibschweißen insbesondere bei Kreuzstromwärmetauschern mit verhältnismäßig großen Abmessungen eignet.

Eine weitere Möglichkeit zur Herstellung der Verbindung zwischen Wärmetauscherplatten und Flansch ist das Spiegelschweißverfahren. Bei diesem Verfahren wird ein als Spiegel bezeichneter Heizkörper mit den Wärmetauscherplatten und/oder dem Flansch in Anlage gebracht, so dass die Kontaktflächen schmelzen und nach Entfernen des Spiegels unter Druck miteinander gefügt werden können.

Auch die Verwendung des Laserschweißverfahrens ist möglich. Durch die hohe Energiedichte des Laserstrahlers sind hohe Arbeitsgeschwindigkeiten möglich. Es ist allerdings darauf zu achten, dass die Energiedichte so dosiert wird, dass die Materialien der Wärmetauscherplatten und des Flansches nicht zersetzt werden.

Eine weitere Möglichkeit zur Herstellung der Verbindung zwischen Wärmetauscherplatten und Flansch ist die Verwendung des Induktionsschweißens. Für diese Fügetechnik wird das Prinzip der Induktionswärme genutzt. Zwischen den am Flansch festzulegenden Wärmetauscherplatten und dem Flansch wird ein Zusatzmaterial positioniert, das ein magnetisch aktivierbares Pulver enthält. Dabei besteht das Zusatzmaterial hauptsächlich aus einem zum Material der Wärmetauscherplatten und/oder des Flansches identischen Material. Die für den Schweißvorgang erforderliche Wärmeenergie wird durch ein hochfrequentes Magnetfeld erzeugt, das durch Hysterese- und Wirbelstromverluste die Partikel erwärmt und dadurch das Zusatzmaterial auf Schmelztemperatur bringt. Dieses überträgt die Wärme auf die Fügeflächen, die dann unter Druck verbunden werden. Dieses Verfahren eignet sich vor allen Dingen dann, wenn die Fügeflächen der Wärmetauscherplatten beziehungsweise des Flansches schwer zugänglich sind.

Es ist auch möglich, dass in den Flansch elektrische Widerstandselemente integriert sind. Diese erzeugen bei Beaufschlagung mit elektrischer Spannung Wärme, wodurch die den Wärmetauscherplatten zugewandten Fügeflächen des Flansches und der anliegenden Fügeflächen der Wärmetauscherplatten aufgeschmolzen werden können. Bei Erstarrung der aufgeschmolzenen Materialien wird dann eine Verbindung zwischen den Wärmetauscherplatten und dem Flansch ausgebildet.

Vorteilhafterweise sind die Wärmetauscherplatten aus Polypropylen gebildet. Polypropylen ist vergleichsweise preiswert und lässt sich beispielsweise durch Thermoformen aus Endlosmaterial zu folienartigen Wärmetauscherplatten weiterverarbeiten. Außerdem verfügt Polypropylen über einen Einsatztemperaturbereich bis 110°, wodurch es gegenüber der warmen Feuchtluft eines Kondensationswäschetrockners ausreichend widerstandsfähig ist.

Vorteilhafterweise ist auch der Flansch aus Polypropylen gebildet, insbesondere deshalb, weil auch die mechanischen Eigenschaften von Polypropylen ausreichend sind, um eine gute Stabilität des erfindungsgemäßen Kreuzstromwärmetauschers zu gewährleisten.

In jedem Fall ist es vorteilhaft, wenn die Materialien der Wärmetauscherplatten und des Flansches identisch sind. In diesem Fall lässt sich der Kreuzstromwärmetauscher problemlos schweißen und sortenrein recyceln, so dass die Bauteile des Kreuzstromwärmetauschers geschreddert und einen erneuten Verwendung zugeführt werden können.

Die Erfindung betrifft auch ein Verfahren zur Herstellung eines Kreuzstromwärmetauschers für Kondensationswärmetrockner, insbesondere eines Kreuzstromwärmetauschers, mit den Merkmalen des Anspruchs 6.

In Ausgestaltung der Erfindung kann auch ein Schweißzusatzmittel verwendet werden, um eine besonders stabile Verbindung zwischen Wärmetauscherplatten und

Flansch herstellen zu können.

Wenn das Schweißzusatzmittel aus dem gleichen Material wie die Wärmetauscherplatten und/oder der Flansch gebildet ist, kann der Kreuzstromwärmetauscher auch bei Verwendung eines Schweißzusatzmittels sortenrein recycelt werden.

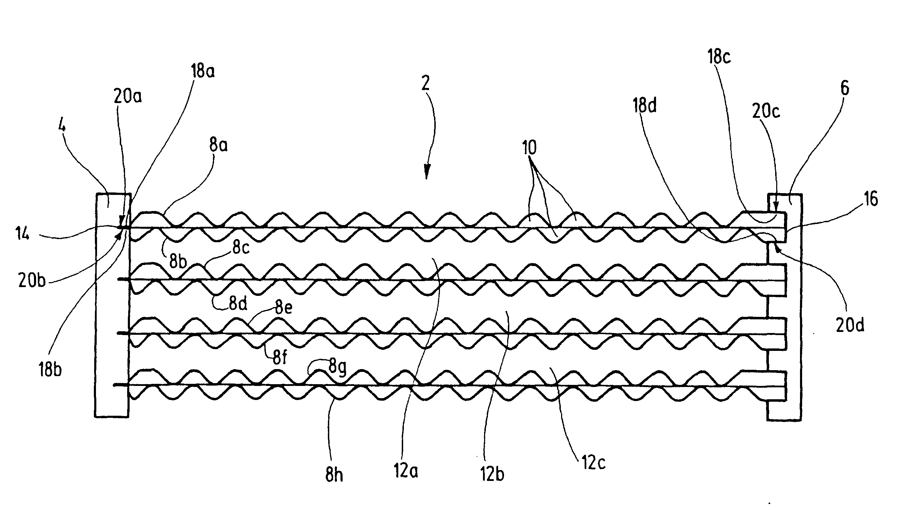

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Der in der Zeichnung dargestellte Kreuzstromwärmetauscher ist insgesamt mit dem Bezugszeichen 2 bezeichnet. Dieser weist einen linker Hand dargestellten, seitlichen Flansch 4 sowie einen rechter Hand dargestellten, seitlichen Flansch 6 auf, wobei die Flansche 4 und 6 sich im Wesentlichen senkrecht zu zwischen den Flanschen 4 und 6 angeordneten Wärmetauscherplatten 8a bis 8h erstrecken. Die Wärmetauscherplatten 8a und 8h sind jeweils paarweise zusammengefasst, so zum Beispiel die Wärmetauscherplatten 8a und 8b.

Die Wärmetauscherplatten 8a bis 8h weisen ein wellenförmiges Profil auf. Einander zugewandte Oberflächen von paarweise zusammengefassten Wärmetauscherplatten (beispielsweise 8a und 8b) bilden sich senkrecht zur Zeichenebene erstreckende Kanäle 10 für Feuchtluft aus. Jeweils zwischen zwei zu Paaren zusammengefassten Wärmetauscherplatten sind Kanäle 12 für die Kühlluft ausgebildet. Vier Paare von Wärmetauscherplatten 8a bis 8h begrenzen insgesamt drei Kanäle 12a bis 12c für Kühlluft.

Der seitliche Flansch 4 weist auf seiner dem Flansch 6 zugewandten Seite schlitzförmige Aufnahmeabschnitte 14 auf. Der Flansch 6 weist auf seiner dem Flansch 4 zugewandten Seite nutenförmige Aufnahmeabschnitte 16 auf.

In dem oberen Aufnahmeabschnitt 14 des Flansches 4 sind Randabschnitte 18a und 18b der Wärmetauscherplatten 8a und 8b zur Ausbildung einer Schweißverbindung aufgenommen. Die Verbindungsstellen sind in der Zeichnung mit 20a und 20b markiert.

Im oberen Aufnahmeabschnitt 16 des Flansches 6 sind die Randabschnitte 18c und 18d der Wärmetauscherplatten 8a und 8b aufgenommen. Dort bildet der Randabschnitt 18c mit dem Aufnahmeabschnitt 16 eine Schweißverbindung 20c aus. Entsprechend bildet der Randabschnitt 18d der Wärmetauscherplatte 8b mit dem Aufnahmeabschnitt 16 eine Schweißverbindung 20d aus.

Der in der Zeichnung dargestellte Kreuzstromwärmetauscher kann ohne Verwendung eines Klebers, beispielsweise aus Gießharz, hergestellt werden. Die Verbindungen 20a bis 20d sind durch ein Schweißverfahren hergestellt.

## Patentansprüche

1. Kreuzstromwärmetauscher (2) für Kondensationswäschetrockner, mit einer Vielzahl von aus thermoplastischem Material bestehenden, folienartiger, biegeschlaffer Wärmetauscherplatten (8), die zueinander parallel geschichtet sind und Kanäle (10, 12) für Feuchtluft und einem Kühlfluid, insbesondere Kühlluft bilden oder begrenzen, mit mindestens einem aus thermoplastischem Material bestehenden Flansch (4, 6), an dem die Wärmetauscherplatten (8) durch eine Schweißverbindung festgelegt sind, **dadurch gekennzeichnet, dass** der Flansch (4, 6) Aufnahmeabschnitte (14, 16) für jeweils zwei paarweise zusammengefasster Randabschnitte (18) zweier Wärmetauscherplatten (8) aufweist und die Randabschnitte (18) der Wärmetauscherplatten (8) und die Aufnahmeabschnitte (14, 16) des Flansches (4, 6) durch die Schweißverbindung (20) miteinander verbunden sind, wobei die Aufnahmeabschnitte (14, 16) als abragende, insbesondere konische Stege oder als Durchbrüche ausgebildet sind.

2. Kreuzstromwärmetauscher nach Anspruch 1, **dadurch gekennzeichnet, dass** die Verbindung (20) durch Ultraschallschweißen, Reibschweißen, Heizelementschweißen, Laserschweißen oder durch Induktionsschweißen hergestellt ist.

3. Kreuzstromwärmetauscher nach Anspruch 1, **dadurch gekennzeichnet, dass** in den Flansch (4, 6) mit Spannung beaufschlagbare elektrische Widerstandselemente integriert sind.

4. Kreuzstromwärmetauscher nach einem der vorhergehenden Ansprüche, **dadurch gekennzeichnet, dass** die Wärmetauscherplatten (8) und/oder der Flansch (4, 6) aus Polypropylen ausgebildet ist/sind.

5. Kreuzstromwärmetauscher nach einem der vorhergehenden Ansprüche, **dadurch gekennzeichnet, dass** die Materialien der Wärmetauscherplatten (8) und des Flansches (4, 6) identisch sind.

6. Verfahren zur Herstellung eines Kreuzstromwärmetauschers für Kondensationswärmetrockner, insbesondere eines Kreuzstromwärmetauschers (2) nach einem der vorhergehenden Ansprüche, mit einer Vielzahl von aus thermoplastischem Material bestehenden, folienartiger, biegeschlaffer Wärmetauscherplatten (8), die zueinander parallel geschichtet sind und Kanäle (10, 12) für Feuchtluft und einem Kühlfluid, insbesondere Kühlluft, bilden oder begrenzen, mit mindestens einem aus thermoplastischem Material bestehenden Flansch (4, 6), an dem die Wärmetauscherplatten (8) angeschweißt sind, **dadurch gekennzeichnet, dass** jeweils zwei paarweise zusammengefasste Randabschnitte (18) zweier Wärmetauscherplatten (8) und Aufnahmeabschnitte (14, 16) des Flansches (4, 6), welche als abragende, insbesondere konische Stege oder als Durchbrüche ausgebildet sind, zur Aufnahme der paarweise zusammengefassten Randabschnitte (18) der Wärmetauscherplatten (8) ineinander gesteckt und durch die Schweißverbindung (20) miteinander verbunden werden.

7. Verfahren nach Anspruch 6, **dadurch gekennzeichnet, dass** ein Schweißzusatzmittel verwendet wird.

8. Verfahren nach Anspruch 7, **dadurch gekennzeichnet, dass** als Schweißzusatzmittel das gleiche Material wie die Wärmetauscherplatten (8) und/oder der Flansch (4, 6) verwendet wird.

## Claims

1. A cross flow heat exchanger (2) for condensation-type clothes dryers, having a plurality of filmlike, pliable heat exchanger plates (8) of thermoplastic material which are layered parallel to one another and form or define conduits (10, 12) for moist air and a cooling fluid, in particular cooling air, having at least one flange (4, 6) comprising thermoplastic material, on which flange the heat exchanger plates (8) are fixed by a welded connection, **characterized in that** the flange (4, 6) has receiving portions (14, 16), for two peripheral portions (18) each, combined in pairs, of two heat exchanger plates (8), and the peripheral portions (18) of the heat exchanger plates (8) and the receiving portions (14, 16) of the flange (4, 6) are joined together by means of the welded connection (20), and the receiving portions (14, 16) are embodied as outward-projecting, in particular conical lands or as openings.

2. The cross flow heat exchanger as defined by claim 1, **characterized in that** the connection (20) is produced by ultrasonic welding, friction welding, or induction welding.

3. The cross flow heat exchanger as defined by claim 1, **characterized in that** electrical resistor elements that can be subjected to voltage are integrated with the flange (4, 6).

4. The cross flow heat exchanger as defined by one of the foregoing claims, **characterized in that** the heat exchanger plates (8) and/or the flange (4, 6) is embodied of polypropylene.

5. The cross flow heat exchanger as defined by one of the foregoing claims, **characterized in that** the materials of the heat exchanger plates (8) and of the flange (4, 6) are identical.

6. A method for producing a cross flow heat exchanger for condensation-type clothes dryers, in particular a cross flow heat exchanger (2) as defined by one of the foregoing claims, having a plurality of filmlike, dimensionally unstable heat exchanger plates (8) comprising thermoplastic material which are layered parallel to one another and form or define conduits (10, 12) for moist air and a cooling fluid, in particular cooling air, having at least one flange (4, 6) comprising thermoplastic material, onto which flange the heat exchanger plates (8) are welded, **characterized in that** two peripheral portions (18) at a time, combined in pairs, of two heat exchanger plates (8) and receiving portions (14, 16) of the flange (4, 6) which are embodied as outward-projecting, in particular conical lands or as openings are inserted one inside the other for receiving the peripheral portions (18), combined in pairs, of the heat exchanger plates (8) and are joined together by means of the welded connection (20).

7. The method as defined by claim 6, **characterized in that** a welding additive is used.

8. The method as defined by claim 7, **characterized in that** as the additive, the same material as the heat exchanger plates (8) and/or the flange (4, 6) is used.

## Revendications

1. Échangeur de chaleur à courants croisés (2) pour sèche-linge à condensation, comportant une pluralité de plaques d'échange thermique (8) lâches et flexibles, en forme de feuilles, réalisées dans un matériau thermoplastique, lesquelles sont disposées en couches parallèlement entre elles et forment ou délimitent des conduits (10, 12) pour l'air humide et un fluide caloporteur, en particulier de l'air froid, comportant au moins une joue (4, 6), réalisée en matériau thermoplastique, à laquelle les plaques d'échange thermique (8) sont fixées par un assemblage soudé, **caractérisé en ce que** la joue (4, 6) comporte des tronçons de réception (14, 16) pour respectivement deux bords (18), regroupés en paire, de deux plaques d'échange thermique (8), et les bords (18) des plaques d'échange thermique (8) et les tronçons de réception de la joue (4, 6) sont assemblés entre eux par l'assemblage soudé (20), les tronçons de réception (14, 16) étant réalisés sous forme d'ailettes saillantes, en particulier coniques, ou sous forme de passages.

2. Échangeur de chaleur à courants croisés selon la revendication 1, **caractérisé en ce que** l'assemblage (20) est réalisé par soudage aux ultrasons, soudage par friction, soudage par thermoéléments, soudage au laser ou par soudage par induction.

3. Échangeur de chaleur à courants croisés selon la revendication 1, **caractérisé en ce que** des éléments de résistance électriques, aptes à être alimentés en tension, sont intégrés dans la joue (4, 6).

4. Échangeur de chaleur à courants croisés selon l'une quelconque des revendications précédentes, **caractérisé en ce que** les plaques d'échange thermique (8) et/ou la joue (4, 6) est/sont réalisée(s) en polypropylène.

5. Échangeur de chaleur à courants croisés selon l'une quelconque des revendications précédentes, **caractérisé en ce que** les matériaux des plaques d'échange thermique (8) et de la joue (4, 6) sont identiques.

6. Procédé pour la fabrication d'un échangeur de chaleur à courants croisés pour sèche-linge à condensation, en particulier un échangeur de chaleur à courants croisés (2) selon l'une quelconque des revendications précédentes, comportant une pluralité de plaques d'échange thermique (8) lâches et flexibles, en forme de feuilles, réalisées dans un matériau thermoplastique, lesquelles sont disposées en couches parallèlement entre elles et forment ou délimitent des conduits (10, 12) pour l'air humide et un fluide caloporteur, en particulier de l'air froid, comportant au moins une joue (4, 6), réalisée en matériau thermoplastique, à laquelle sont soudées les plaques d'échange thermique (8), **caractérisé en ce que** respectivement deux bords (18), regroupés en paire, de deux plaques d'échange thermique (8), et des tronçons de réception (14, 16) de la joue (4, 6), lesquels sont réalisés sous forme d'ailettes saillantes, en particulier coniques, ou sous forme de passages, sont enfichés les uns dans les autres pour recevoir les bords (18) regroupés en paire, et sont assemblés entre eux par l'assemblage soudé (20).

7. Procédé selon la revendication 6, **caractérisé en ce que** l'on utilise un métal d'apport de soudage.

8. Procédé selon la revendication 7, **caractérisé en ce que** le métal d'apport de soudage utilisé est le même matériau que celui des plaques d'échange thermique (8) et/ou de la joue (4, 6).
